# FASCICULE DE BREVET EUROPEEN

(11) **EP 0 858 571 B1**
(45) Date de publication et mention de la délivrance du brevet: **22.08.2001**
(21) Numéro de dépôt: 96934978.6
(22) Date de dépôt: 25.10.1996
(51) Int. Cl.: F16M 11/12

(54) **DISPOSITIF DE SUPPORT A INCLINAISON REGLABLE ET NOTAMMENT A CONSERVATION DE SON HORIZONTALITE**
TRAGVORRICHTUNG MIT EINSTELLBARER NEIGUNG UND INSBESONDERE MIT HALTUNG IN HORIZONTALER STELLUNG
TILT-ADJUSTABLE SUPPORTING DEVICE, IN PARTICULAR MAINTAINED IN A HORIZONTAL POSITION

(30) Priorité: 21.11.1995 FR 9513792
(43) Date de publication de la demande: 19.08.1998
(73) Titulaire: Rivages Productions Sàrl, 93300 Aubervilliers (FR)
(72) Inventeur: MAHY, Laurent, F-95460 Ezanville (FR); TOURET, Félix, F-94300 Vincennes (FR)
(74) Mandataire: Wagret, Frédéric
(86) Numéro de dépôt international: FR9601677
(87) Numéro de publication internationale: WO9719291

(56) Documents cités:
- EP-A- 0 127 895
- DE-A- 2 345 894
- GB-A- 2 250 109
- US-A- 3 215 391
- US-A- 4 370 813

## Description

On connaît déjà par la demande de brevet en Grande-Bretagne N° 2 250 109 un dispositif de support à inclinaison réglable et notamment à conservation de son horizontalité qui comprend un plateau inférieur et un plateau supérieur reliés par deux vérins et un montant de longueur constante définissant ensemble un triangle. Dans cette disposition, les vérins et le montant sont reliés par une rotule au plateau inférieur et par un axe d'articulation au plateau supérieur, ces vérins et montant étant ainsi disposés à chaque fois entre une rotule à son extrémité inférieure et un axe d'articulation à son extrémité supérieure.

Il apparaît cependant que cette disposition connue présente divers inconvénients dont les principaux sont relatifs aux jeux de positionnement qui, tout en étant faibles, sont trop importants pour assurer un positionnement précis et stable d'une caméra. En outre, ce dispositif connu qui ne permet que de maintenir ou rétablir son horizontalité est d'une construction compliquée tandis que la disposition des vérins et du montant reliés de manière articulée aux plateaux ne permet pas une implantation facile des inclinomètres et des circuits électroniques pour pouvoir ensuite disposer d'une place suffisante et bien dégagée pour la fixation du support sur le piétement et pour la fixation d'une caméra sur ce support.

La présente invention a notamment pour but de remédier à ces inconvénients et concerne à cet effet un dispositif de support de ce type, caractérisé en ce que les vérins et le montant sont fixés rigidement sur l'un des plateaux, dit plateau inférieur, et sont reliés à l'autre plateau, dit plateau supérieur, par un ensemble d'articulation comprenant un cardan et un axe de pivotement, chaque axe de pivotement étant situé parallèlement au côté opposé du triangle délimité sur ce plateau.

Selon une autre caractéristique de l'invention, les trois ensembles d'articulation à cardan et à axe de pivotement sont identiques.

Selon une autre caractéristique de l'invention, les cardans sont disposés du côté de l'extrémité des vérins et du montant alors que les axes de pivotement sont disposés du côté du plateau supérieur.

Selon une autre caractéristique de l'invention, le dispositif comporte deux inclinomètres doubles disposés chacun dans le circuit d'alimentation de l'un des vérins, ce circuit comportant un ensemble contacteur sensible à la gravité, propre à assurer le réglage de l'inclinaison du dispositif dans sa position droite ou renversée.

Selon une autre caractéristique de l'invention, les vérins comportent des moyens de réglage mécanique, manuel, de leur longueur.

L'invention est représentée à titre d'exemple non limitatif sur les dessins ci-joints dans lesquels :
- la figure 1 est une vue de dessus partiellement coupée du dispositif conforme à l'invention,
- la figure 2 est une coupe suivant A-A de la figure 1,
- la figure 3 est une coupe suivant B-B de la figure 2,
- la figure 4 est une vue de dessous du plateau inférieur du dispositif,
- la figure 5 est un schéma synoptique de l'alimentation du moteur de l'un des vérins électriques du dispositif.

La présente invention a en conséquence pour but la réalisation d'un dispositif de support qui soit d'inclinaison réglable et qui puisse valablement être mis en oeuvre pour supporter une caméra. Ce dispositif de support présente à cet effet un jeu nul dans les trois directions de l'espace.

Ce dispositif est également d'une construction simple et peut être utilisé soit en position droite, soit en position renversée, l'inclinaison étant réglable dans les deux sens, soit manuellement, soit automatiquement. Dans ce dernier cas du réglage automatique, le dispositif assure la conservation de l'horizontalité du support par rapport au sol.

Suivant les dessins ci-joints, le dispositif comprend un plateau inférieur 1 et un plateau supérieur 2 qui sont reliés par deux vérins électriques 3 et 4 et par un montant de longueur constante 5.

Ces vérins et montant 3, 4 et 5 définissent ensemble un triangle, de préférence un triangle équilatéral, et sont fixés rigidement, perpendiculairement, au plateau inférieur alors qu'ils sont reliés au plateau supérieur par trois ensembles d'articulation 6.

Ces ensembles d'articulation qui sont identiques comprennent un cardan 6₁ et un axe d'articulation 6₂. Le cardan 6₁ est supporté par une extrémité 3₁, 4₁ (non représentée) des vérins et 5₁ du montant alors que les axes d'articulation 6₂ sont montés sur le plateau supérieur 2 et définissent les sommets de la structure triangulaire susmentionnée. Ces axes 6₂ sont chacun disposés parallèlement au côté en regard 7 de cette disposition triangulaire.

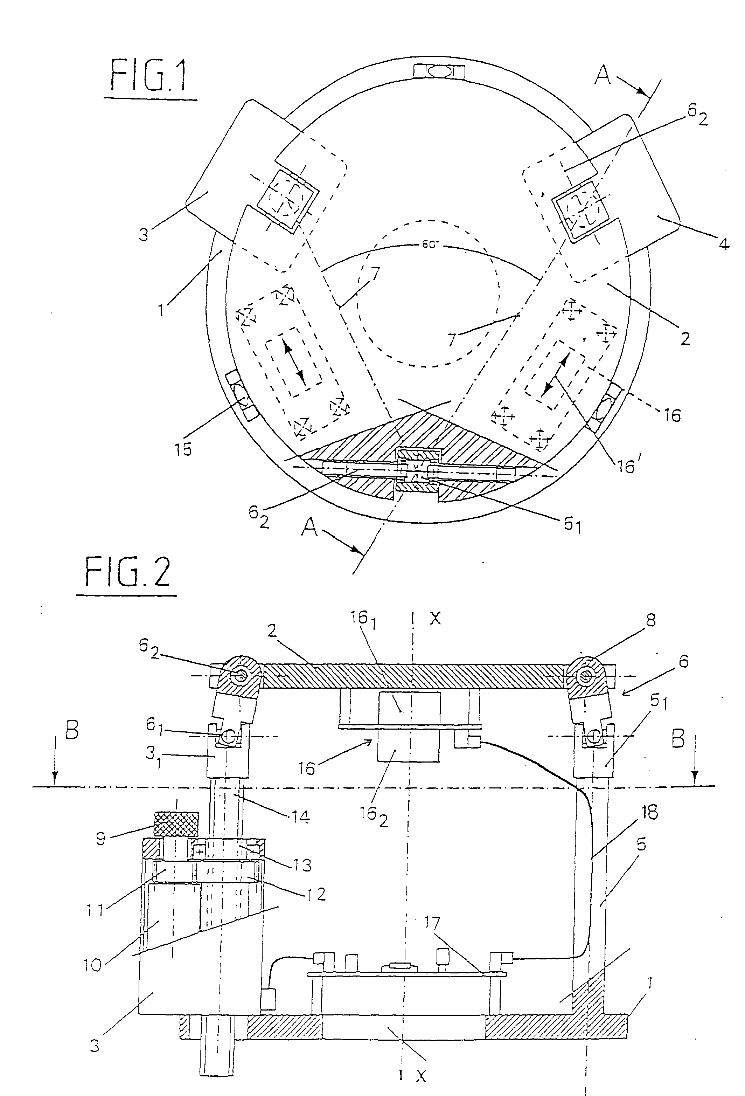

Par ailleurs, les axes d'articulation 6₂ sont disposés par rapport au cardan 6₁ de manière que les pièces 8 qui relient les axes aux cardans soient inclinées d'un angle α par rapport à l'axe vertical x du dispositif (voir figure 2).

Toutes ces dispositions qui reportent l'ensemble des articulations à proximité immédiate du plateau supérieur alors que les vérins et montants sont fixés rigidement au plateau inférieur, permettent de réduire les jeux du plateau supérieur 2 par rapport au plateau inférieur 1 dans les trois directions de l'espace.

Ce résultat est également obtenu par la mise en oeuvre des cardans qui autorisent donc un déplacement dans toutes les directions de l'espace mais sans rotation.

Cette disposition permet par ailleurs de réduire l'encombrement à l'intérieur du volume délimité par les deux plateaux afin de faciliter l'implantation des mécanismes assurant le fonctionnement du dispositif de support, ainsi que des mécanismes supportant ou supportés par ce dispositif.

Le réglage manuel de l'inclinaison du plateau supérieur 2 ou le réglage automatique pour maintenir son horizontalité est obtenu à partir des vérins électriques 2 qui comportent un bouton de réglage manuel 9 de la motorisation disposé sur l'axe de sortie du moto-réducteur 10, cet axe comportant également un pignon 11 qui engrène avec un second pignon 12 solidaire d'un écrou 13 en prise sur la tige filetée 14 maintenue fixe en rotation.

La rotation manuelle du bouton 9 ou l'alimentation du moto-réducteur 10 assure donc le déplacement par translation axiale des tiges filetées 14 par suite de la rotation de l'écrou 13.

Des niveaux à bulle 15, de préférence au nombre de trois, sont disposés à la périphérie du plateau supérieur 2 entre les vérins 3, 4 et le montant 5 afin de faciliter la vision de l'horizontalité notamment lors d'un réglage manuel.

Lors du fonctionnement automatique du dispositif de support et pour assurer la conservation de l'horizontalité du plateau supérieur 2 dans le cas de sa position droite et du plateau inférieur 1 dans le cas de sa position renversée, il est prévu deux inclinomètres **monoaxiaux** doubles 16 sensibles à la gravité, disposés à chaque fois entre un vérin et le montant, l'axe de travail 16₁ de ces inclinomètres doubles étant à chaque fois parallèle au côté adjacent 7 de la structure triangulaire susmentionnée.

Ces inclinomètres doubles qui sont fixés sous la face inférieure du plateau supérieur 2 comportent chacun deux éléments sensibles à la gravité, connus en eux-mêmes et qui produisent un signal fonction de l'inclinaison en mesurant la conductivité d'un liquide par un champ de dispersion magnétique afin de déterminer tout d'abord le niveau de remplissage puis ensuite, selon un mode différentiel, l'angle d'inclinaison.

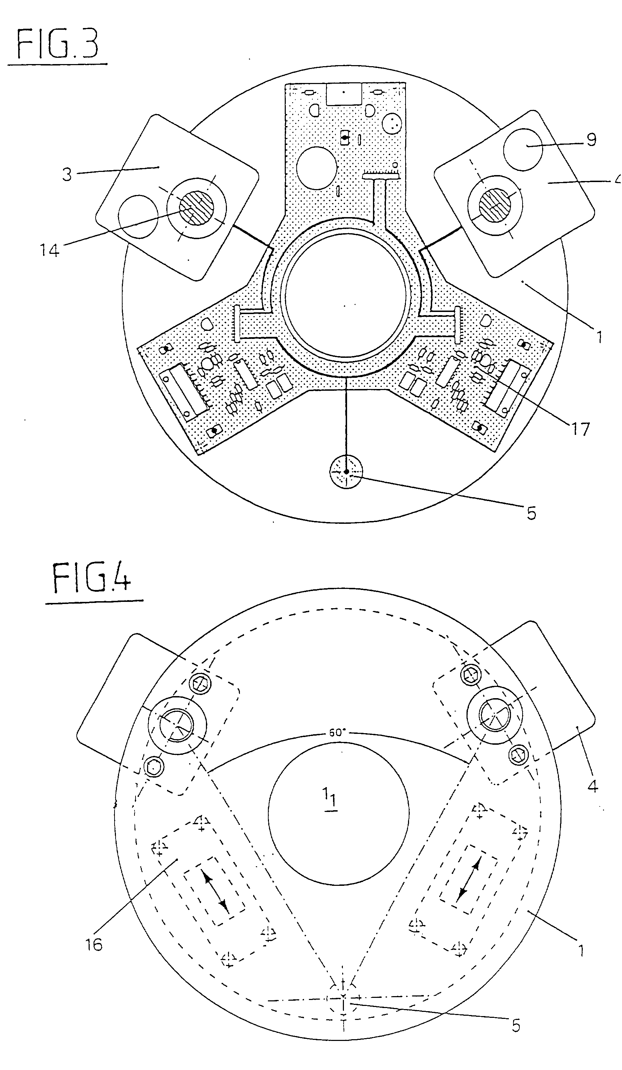

Le circuit électronique assurant la commande de chacun des vérins 3 à partir de l'un des inclinomètres doubles 16 est fixé sur la face supérieure du plateau inférieur 1 par l'intermédiaire d'un circuit imprimé 17 et occupe une disposition triangulaire entre les vérins 3, 4 et le montant 5 (voir figure 3) de façon à réaliser une implantation rationnelle, protégée mécaniquement dans l'encombrement du dispositif de support et dégageant l'orifice central 1₁ du plateau inférieur 1 à l'aide duquel le dispositif de support s'adapte de manière fixe par exemple à un piétement.

L'alimentation de ce circuit sera de préférence réalisée à partir de batteries.

Les liaisons électriques 18 entre les inclinomètres doubles 16 fixés sous le plateau supérieur 2 et le circuit électronique monté sur le circuit imprimé 17 fixé sur la face supérieure du plateau inférieur 1, passe au travers du montant fixe creux 5 de façon à être convenablement protégé.

Le circuit électronique de commande de chaque moteur 10 des vérins 3 et 4 à partir des inclinomètres 16₁ et 16₂ de chaque inclinomètre double 16, comprend un contacteur inverseur 19 fonctionnant par gravité, de préférence du type à contact à mercure, qui est relié à chacun des éléments d'inclinomètre 16₁ et 16₂ afin de mettre l'un d'entre eux en circuit suivant que le dispositif de support occupe une position normale (le plateau supérieur étant disposé en haut), ou une position renversée (le plateau supérieur étant disposé sous le plateau inférieur).

Ce circuit comprend également un contacteur inverseur 20 destiné, soit à mettre en circuit les éléments inclinomètres 16₁ et 16₂ par l'intermédiaire du contacteur 19 pour assurer un maintien automatique de l'horizontalité du support, soit à mettre en circuit des contacteurs inverseurs 21 et 22 afin de permettre l'alimentation du moteur 10 du vérin concerné, soit pour assurer l'allongement du vérin (contacteur 21), soit pour assurer son raccourcissement (contacteur 22).

Ces contacteurs 21 et 22 sont de préférence constitués par des boutons poussoirs.

Lorsque le fonctionnement manuel est sélectionné par l'inverseur 20, l'actionnement des boutons poussoirs 21 ou 22 alimente alors le moteur 10 dans un sens de rotation, ou le sens inverse, par l'intermédiaire d'un étage 23 de contrôle du moteur et par l'intermédiaire d'un comparateur 24.

Lorsque le fonctionnement automatique est sélectionné par le contacteur inverseur 20, l'alimentation du moteur 10 s'effectue, dans ce cas, par l'intermédiaire du contrôleur de moteur 23 et d'un comparateur à fenêtre 25 à partir de l'un ou l'autre des inclinomètres 16₁, 16₂.

Ces inclinomètres sont également reliés à des dispositifs à potentiomètre 26 et 27 permettant de régler d'une part la position zéro, d'autre part la sensibilité du dispositif.

Les potentiels de référence de ces comparateurs 24 et 25 sont déterminés par un pont diviseur comprenant quatre résistances 28, 29, 30 et 31.

Le dispositif conforme à l'invention permet donc un réglage manuel et mécanique de l'inclinaison par les boutons 9, un réglage manuel et électrique de l'inclinaison par les contacteurs 21 et 22 et un réglage automatique avec maintien de l'horizontalité par l'actionnement du contacteur inverseur 20.

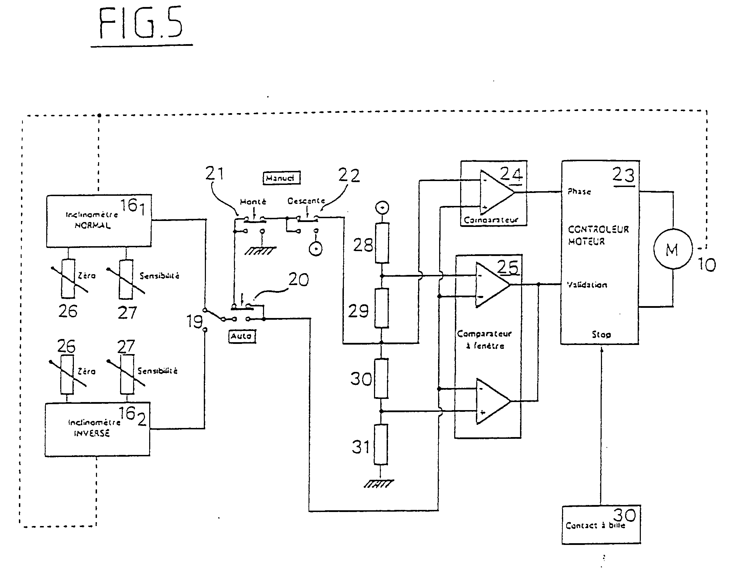

Le dispositif conforme à l'invention comportera également un contacteur à bille schématisé en 30 sur la figure 5, ce contacteur à bille étant destiné à interdire l'alimentation du moteur 10 dans un sens ou dans l'autre lorsque l'inclinaison du plateau supérieur par rapport au plateau inférieur dépasse une valeur déterminée et, par exemple ± 10°, au-delà de laquelle les vérins ne permettent plus de rattraper l'horizontalité.

Dans la présente description, il est prévu deux vérins et un montant de longueur constante. Il sera cependant compris que ce montant pourra lui-même être constitué par un vérin actionné manuellement de manière indépendante et qui permette le réglage de la distance entre les deux plateaux.

## Revendications

1. Dispositif de support à inclinaison réglable et notamment à conservation de son horizontalité, comportant deux plateaux superposés (1 et 2) reliés par deux vérins à commande électrique (3 et 4) de longueur réglable et par un montant (5) de longueur constante formant sur ces plateaux les sommets de triangles, caractérisé en ce que les vérins et le montant sont fixés rigidement sur l'un des plateaux (1), dit plateau inférieur, et sont reliés à l'autre plateau (2), dit plateau supérieur, par un ensemble d'articulation (6) comprenant un cardan (6₁) et un axe de pivotement (6₂), chaque axe de pivotement (6₂) étant situé parallèlement au côté opposé (7) du triangle délimité sur ce plateau et en ce que, pour chaque ensemble d'articulation, soit le cardan, soit l'axe de pivotement est monté sur le plateau supérieur.

2. Dispositif conforme à la revendication 1, caractérisé en ce que les trois ensembles d'articulation (6) à cardan et à axe de pivotement sont identiques.

3. Dispositif conforme à l'une quelconque des revendications précédentes, caractérisé en ce qu'il comporte deux inclinomètres (16) doubles (16₁,16₂) disposés chacun dans le circuit d'alimentation de l'un des vérins (3,4), ce circuit comportant un ensemble contacteur (19) sensible à la gravité, propre à assurer le réglage de l'inclinaison du dispositif dans sa position droite ou renversée.

4. Dispositif conforme à la revendication précédente, caractérisé en ce que le circuit électrique d'alimentation des vérins (3,4) comporte un contacteur inverseur (20) pour la mise en/hors circuit des inclinomètres et inversement pour la mise hors/en circuit de deux contacteurs (21 et 22) d'alimentation directe des vérins.

5. Dispositif conforme à l'une quelconque des revendications précédentes, caractérisé en ce que les vérins (3,4) comportent des moyens (9) de réglage mécanique, manuel, de leur longueur.

6. Dispositif conforme à la revendication 3, caractérisé en ce que le circuit électronique d'alimentation des vérins est fixé sur le plateau inférieur (1) et est relié aux inclinomètres (16), fixés sur le plateau supérieur, par des liaisons conductrices (18) disposées à l'intérieur du montant (5) de hauteur constante.

7. Dispositif conforme à l'une quelconque des revendications précédentes, caractérisé en ce que le circuit électrique d'alimentation des vérins (3,4) est fixé sur la face supérieure du plateau inférieur (1) autour d'un perçage central (1₁) de ce plateau et entre les vérins et le montant.

8. Dispositif conforme à l'une quelconque des revendications précédentes, caractérisé en ce que l'axe de pivotement (6₂) et le cardan (6₁) de chaque ensemble d'articulation (6) sont reliés par une pièce (8), ces pièces étant inclinées vers l'axe (X-X) du dispositif.

## Patentansprüche

1. Trägervorrichtung mit einstellbarer Neigung und insbesondere mit Erhaltung ihrer Horizontalität, die zwei übereinander angeordnete Platten (1 und 2) aufweist, die durch zwei Zylinder (3 und 4) mit elektrischer Steuerung und einstellbarer Länge und einen Pfosten mit konstanter Länge verbunden sind, die an diesen Platten die Spitzen von Dreiecken bilden, dadurch gekennzeichnet, dass die Zylinder und der Pfosten an einer der Platten (1), untere Platte genannt, starr befestigt und mit der anderen Platte (2), obere Platte genannt, über eine Gelenkeinheit (6) verbunden sind, die ein Kardangelenk (6₁) und einen Schwenkbolzen (6₂) umfasst, wobei jeder Schwenkbolzen (6₂) zur entgegengesetzten Seite (7) des abgegrenzten Dreiecks auf dieser Platte parallel liegt, und dass für jede Gelenkeinheit entweder das Kardangelenk oder der Schwenkbolzen an der oberen Platte angebracht ist.

2. Vorrichtung nach Anspruch 1, dadurch gekennzeichnet, dass die drei Gelenkeinheiten (6) mit Kardangelenk und Schwenkbolzen identisch sind.

3. Vorrichtung nach einem der vorhergehenden Ansprüche, dadurch gekennzeichnet, dass sie zwei doppelte (16₁, 16₂) Neigungsmesser (16) aufweist, die jeweils im Speisestromkreis eines der Zylinder (3, 4) angeordnet sind, wobei dieser Stromkreis eine für die Schwere empfindliche Schaltereinheit (19) aufweist, die geeignet ist die Einstellung der Neigung der Vorrichtung in ihre gerade oder gekippte Position sicherzustellen.

4. Vorrichtung nach dem vorhergehenden Anspruch, dadurch gekennzeichnet, dass der elektrische Speisestromkreis der Zylinder (3, 4) einen Wendeschalter (20) aufweist, um Neigungsmesser in/außerhalb des Stromskreises zu setzen, und umgekehrt, um zwei Schalter (21 und 22) für die direkte Versorgung der Zylinder außerhalb/in den Stromkreis zu setzen.

5. Vorrichtung nach einem der vorhergehenden Ansprüche, dadurch gekennzeichnet, dass die Zylinder (3, 4) Mittel (9) zur mechanischen Einstellung ihrer Länge von Hand aufweisen.

6. Vorrichtung nach Anspruch 3, dadurch gekennzeichnet, dass die elektronische Versorgungsschaltung der Zylinder an der unteren Platte (1) befestigt und mit den Neigungsmessern (16), die an der oberen Platte befestigt sind, durch leitende Verbindungen (18) verbunden ist, die im Inneren des Pfostens (5) mit konstanter Höhe angeordnet sind.

7. Vorrichtung nach einem der vorhergehenden Ansprüche, dadurch gekennzeichnet, dass der elektrische Speisestromkreis der Zylinder (3, 4) an der Oberseite der unteren Platte (1) um eine zentrale Bohrung (1₁) dieser Platte herum und zwischen den Zylindern und dem Pfosten befestigt ist.

8. Vorrichtung nach einem der vorhergehenden Ansprüche, dadurch gekennzeichnet, dass der Schwenkbolzen (6₂) und das Kardangelenk (6₁) jeder Gelenkeinheit (6) über ein Teil (8) verbunden sind, wobei diese Teile zur Achse (X-X) der Vorrichtung hin geneigt sind.

## Claims

1. Support device with adjustable inclination and particularly with conservation of its horizontality, comprising two superposed plates (1 and 2) connected by two electrically controlled jacks (3 and 4) of adjustable length and by an upright (5) of constant length forming on these plates the apices of triangles, characterized in that the jacks and the upright are rigidly fixed on one of the plates (1), so-called lower plate, and are connected to the other plate (2), so-called upper plate, by an articulation assembly (6) comprising a universal joint (6₁) and a pivot pin (6₂), each pivot pin (6₂) being located parallel to the opposite side (7) of the triangle defined on this plate and in that, for each articulation assembly, either the universal joint or the pivot pin is mounted on the upper plate.

2. Device according to Claim 1, characterized in that the three articulation assemblies (6) incorporating universal joint and pivot pin, are identical.

3. Device according to either one of the preceding Claims, characterized in that it comprises two inclination indicators (16), double (16₁, 16₂), each disposed in the supply circuit of one of the jacks (3, 4), this circuit comprising a gravity-sensitive contactor assembly (19) adapted to ensure adjustment of the inclination of the device in its upright or upturned position.

4. Device according to the preceding Claim, characterized in that the electrical supply circuit of the jacks (3, 4) comprises a reversing contactor (20) for switching the inclination indicators on/off and, inversely, for switching two contactors (21 and 22) which directly supply the jacks, off/on.

5. Device according to any one of the preceding Claims, characterized in that the jacks (3, 4) comprise means (9) for mechanically, manually, adjusting their length.

6. Device according to Claim 3, characterized in that the electronic circuit for supplying the jacks is fixed on the lower plate (1) and is connected to the inclination indicator (16) fixed on the upper plate by conducting links (18) disposed inside the, upright (5) of constant height.

7. Device according to any one of the preceding Claims, characterized in that the electrical circuit for supplying the jacks (3, 4) is fixed on the upper face of the lower plate (1) around a central bore (1₁) in this plate and between the jacks and the upright.

8. Device according to any one of the preceding Claims, characterized in that the pivot pin (6₂) and the universal joint (6₁) of each articulation assembly (6) are connected by a piece (8), these pieces being inclined towards the axis (X-X) of the device.
